# EUROPEAN PATENT APPLICATION

(11) **EP 4 800 782 A1**
(43) Date of publication of application: **02.09.2026**
(21) Application number: 25382184.7
(22) Date of filing: 27.02.2025
(51) Int. Cl.: H01M 4/86, C25B 1/04, C25B 11/052, C25B 11/091, C25B 11/093, H01M 4/88

(54) **ELECTRODE PRODUCTION METHOD AND ELECTRODE THEREOF**

(71) Applicant: Joltech Solutions, S.L., 08908 L'Hospitalet de Llobregat (ES)
(72) Inventor: DI GIACOMO, Alessio, E-08908 L'Hospitalet de Llobregat, Barcelona (ES); BUCCI, Alberto, E-08908 L'Hospitalet de Llobregat, Barcelona (ES)
(74) Representative: ABG Intellectual Property Law, S.L.

(57) **Abstract**

The present invention relates to a method for the preparation of a cathode for alkaline water electrolysis of water particularly useful in the reaction of hydrogen evolution comprising nickel, iron and/or cobalt oxide and a noble metal based on the self-combustion of a precursor mixture deposited or coated on the surface of an electrode carrier. The invention also relates to an electrode obtainable according to said method and to its use as cathode in water electrolysis, in particular in alkaline water electrolysis.

## Description

### FIELD OF THE INVENTION

The present invention relates to a method for the preparation of a cathode for alkaline water electrolysis of water particularly useful in the reaction of hydrogen evolution comprising nickel, iron and/or cobalt oxide and a noble metal based on the self-combustion of a precursor mixture deposited or coated on the surface of an electrode carrier. The invention also relates to an electrode obtainable according to said method and to its use as cathode in water electrolysis, particularly in alkaline water electrolysis.

### BACKGROUND

Green hydrogen is currently regarded by policy makers as a unique opportunity to decarbonize industry and generate and store energy in a sustainable manner. Hydrogen is indeed an efficient energy vector that can be stored and transported easily and can be made by using water and electricity through electrolysis. When said electricity comes from a renewable source, the resulting hydrogen is called green hydrogen. More affordable renewable energy sources and technologies coupled with increasing costs of fossil fuels drive the growth of an opportunity for green hydrogen, in a context where global warming represents a significant threat to humanity, which calls for decarbonization solutions. Water electrolysis is a well-established technology allowing for the production of hydrogen. Different technologies are being implemented in the field of water electrolysis, including alkaline water electrolysis (AWE), Proton Exchange Membrane electrolysis (PEM), anion exchange membrane electrolysis (AEM) and solid oxide electrolysis (SOEC).

Alkaline water electrolysis (AWE) is the oldest water electrolysis technology and is still widely used industrially nowadays. In said electrolytic process, two half chemical reactions take place: hydrogen evolution reaction (also called HER) takes place at the cathode according to equation (A) and oxygen evolution reactions (also called OER) takes place at the anode according to equation (B):

H₂O + 2 e⁻ → H₂ + 2 OH⁻ (A)

2OH⁻→½ O₂ + H₂O + 2e⁻ (B)

The standard thermodynamic potential for these reactions is of 1.23 V. Nevertheless, higher potentials are required for practical hydrogen synthesis. In this regard, the materials forming both the anode and the cathode can play a fundamental role in reducing the potential that needs to be applied for hydrogen synthesis, and hence the energy balance of the process and the cost of hydrogen. While the development of materials and catalysts for the Oxygen Evolution Reaction (equation (B)) has been identified as the most promising way to improve current processes for alkaline water electrolysis, numerous efforts have been made to develop alternative cathode materials susceptible of improving the overall electrocatalytic efficiency of the process and bringing down the cost of production of hydrogen.

Traditionally, most of the systems used in industry rely on cathode materials based on noble metals, such as platinum, iridium, rhodium or ruthenium, which exhibit outstanding performance and figure amongst the best cathode materials for AE. However, these materials are scarce and costly, which hinders their use in commercial application. It is thus desirable to develop cathode materials based on earth abundant metals and/or reducing the amount of noble metals in electrodes. Several alternative systems have been reported in the art in this regard. For instance, nano-structured cathode materials based on carbides, phosphides or chalcogenides of transition metals (e.g. Mo, Ni, Co) have been reported and reviewed in Wang, S., Lu, A. & Zhong, CJ. Hydrogen production from water electrolysis: role of catalysts. Nano Convergence 8, 4 (2021). These systems typically require a demanding synthetic procedure and provide cathode materials having a performance well below that of cathodes based on noble metals.

It is also known in the art that nickel oxide NiO may be used as cathode material in alkaline water electrolysis. The document Huo, L., Jin, C., Jiang, K., Bao, Q., Hu, Z. and Chu, J. (2022), Applications of Nickel-Based Electrocatalysts for Hydrogen Evolution Reaction. Adv. Energy Sustainability Res., 3: 2100189 further provides an overview of cathode materials for the Hydrogen Evolution Reaction comprising nickel oxide, among other nickel phases. This document is silent about the incorporation of noble metals, such as platinum, ruthenium, rhenium, rhodium, or iridium in nickel oxide-based cathode materials.

In addition, M. Gong and co-workers report in Nat Commun, 5(2014) 4695 report a nanoscale hierarchical NiO/Ni system attached to carbon nanotubes. The interface of NiO and Ni is disclosed as acting synergistically in, on the one hand, hosting hydroxide ions from water splitting and, on the other hand, adsorbing hydrogen. The authors are however silent about the incorporation of noble metals, such as platinum, ruthenium, rhenium, rhodium, or iridium in the cathode material.

Cathode materials combining noble metals such as platinum and earth abundant metals such as nickel have also been described in the art. It is indeed known in the art that incorporating non-noble metals into Platinum allows reducing the usage of precious noble metals and promote the activity of the catalyst. For instance, Z. Cao and co-workers disclose in Nat. Commun., 2017, 8, 15131 nano multipods having an hexagonal shape consisting of a Ni·Pt alloy that exhibits excellent activity towards the Hydrogen Evolution Reaction. The hexagonal close-packed Pt-Ni alloy nano-multipods are synthesized via a solvothermal route, where the branches of nano-multipods take the shape of excavated hexagonal prisms assembled by six nanosheets of 2.5 nm thickness. The specific nanostructure and shape of the material is disclosed as providing an improved catalytic activity in Hydrogen Evolution Reaction. The authors do not mention the presence of nickel oxide in the formed cathode material.

In a different approach, L. Xie, and co-workers report in Inorg. Chem. Front. 5(6), 1365-1369 (2018) a nickel nanosheet comprising metallic nickel on the surface of which nanoparticles of NiPt are arranged to form a nanoarray. The material is prepared via hydrogen reduction of PtO₂·Ni(OH)₂ prepared by hydrothermal treatment from Ni(Cl)₂ in the presence of hexachloroplatinate salt. The presence of the PtNi nanoarray appears to be of utmost importance for the activity of the material according to comparative examples. The authors are however silent about the use of nickel oxide or solution combustion synthesis in such an approach.

Z. Zhao and co-workers disclose in J. Am. Chem. Soc. 2018, 140, 29, 9046-9050 a PtNi-O nanostructure exhibiting outstanding performance for the HER in AE. The disclosed system is based on surface engineered octahedral PtNi nanoparticles prepared by solvothermal route, whereby the Pt 111 facets are enriched with NiO, acting as precursor of Ni(OH)₂. The amount of platinum in said system accounts for more than 50% in weight of the amount of metals.

Luca Bruno and co-workers report in Physical insights into alkaline overall water splitting with NiO microflowers electrodes with ultra-low amount of Pt catalyst, International Journal of Hydrogen Energy, Volume 47, Issue 80, 2022, Pages 33988-33998, a system based on nickel oxide comprising low amounts of Pt catalyst for the HER reaction. The electrode is prepared by depositing, in a first instance, a dispersion of NiO microflowers prepared by reacting nickel(II) sulfate with potassium persulfate in the presence of ammonia on a graphene paper substrate. After this first deposition step and drying, a dispersion of Pt nanoparticles prepared from ascorbic acid and hexachloroplatinic acid was added in the form of drops on the surface of the electrode. This allowed preparing samples having Pt loadings as low as 3.9 µg/cm² and up to 11.2 µg/cm². The efficiency of the electrode in HER reaction was showed to increase with an increasing load of platinum.

Qun Li and colleagues disclose in Facile and rapid synthesis of Pt-NiOx/NiF composites as a highly efficient electrocatalyst for alkaline hydrogen evolution, International Journal of Hydrogen Energy, Volume 47, Issue 12, 2022, Pages 7504-7510, an electrode comprising nickel foam as a carrier that is submitted to surface oxidation and partial galvanic replacement with hexachloroplatinic acid, thus producing Pt·NiOₓ/Ni electrodes having an atomic Pt content of 1.24% in some instances. The reported electrode exhibits a HER activity of a current density of 183 mA/cm² at an overpotential of 200 mV. When other electrode carriers such as copper foam were used, the HER activity decreased drastically.

German patent application DE 3 612 790 A1 discloses a cathode for the production for the production of hydrogen comprising a porous nickel layer whereby the pores are filled with one or more of nickel oxide, platinum group metals and oxides thereof. Electrodes comprising oxides of nickel and ruthenium are particularly disclosed. These electrodes according to a method which comprises contacting a porous nickel layer with a precursor solution comprising ruthenium (III) chloride, nickel nitrate and hydrochloric acid to produce an electrode precursor that is further thermally treated at 520 °C to produce the electrode. The authors do not however suggest to prepare nickel oxide by combustion synthesis.

European patent application EP 0 129 734 A2 discloses electrodes for the chlor-alkali process comprising oxides of platinum group metals and secondary electrocatalytic metals (e.g. Ni), which are obtained according to the following method (i) providing an electroconductive substrate, such as nickel; (ii) providing a solution of metal oxide precursor compound(s) (e.g. nickel chloride; RuCl₃ or K₂PtCl₆) and an etchant capable of etching the surface of the substrate (e.g. hydrazine); (iii) heating to remove volatiles from the so-coated substrate to cause the metal values of the precursor compounds and those etched from the substrate or previous coating to be concentrated and recoated on the substrate or previously applied coating, and further heating, in the presence of oxygen, air or an oxidizing agent, to a temperature sufficient to oxidize the metal values. In said process, metal precursors are thermally oxidized.

From what is disclosed in the art, it derives that there is still a need for providing improved cathodes for alkaline water electrolysis, in particular cathodes that are easy and quick to manufacture, present a high efficiency in terms of hydrogen production and/or a reduced content of noble metals such as platinum, ruthenium, rhodium, rhenium, or iridium.

### SUMMARY OF THE INVENTION

After exhaustive research, the inventors have developed an electrode comprising a support coated with a layer comprising a metal oxide selected from nickel oxide, iron oxide, cobalt oxide and a mixture thereof and a metal selected from the group consisting of platinum, iridium, rhodium, rhenium, and ruthenium. The electrode according to the present invention has been found particularly useful as cathode in alkaline water electrolysis. The preparation of said electrode comprises producing an electrode precursor by transferring to a support for an electrode comprising a first metal a precursor mixture suitable for combustion synthesis comprising a fuel component, a source of a nitrate salt of one or more of nickel(II), cobalt(II) and iron(III) and a solvent and an oxidation agent comprising a noble metal M in its molecular formula selected from the group consisting of platinum, iridium, rhodium, rhenium, and ruthenium and suitable for oxidizing said first metal. Alternatively, the electrode support may be contacted with said oxidation agent and a precursor mixture suitable for combustion synthesis comprising a fuel component, a source of a nitrate salt of one or more of nickel(II), cobalt(II) and iron(III) and a solvent is further transferred to the resulting treated electrode support, thus providing an electrode precursor. In a following step, the electrode precursor is heated above the self-ignition point of the precursor mixture for solution combustion synthesis, which provides for the preparation of a metal oxide selected from nickel oxide, iron oxide, cobalt oxide and a mixture thereof by self-combustion. The material of the invention is thus prepared by self-combustion of a precursor mixture previously deposited on the surface of the electrode support. The method of the invention provides an electrode comprising an active material comprising an alloy or a mixture of nickel, iron and/or cobalt oxide with the noble metal M. Said noble metal M may be in non-oxidized form and/or in oxidized form.

Unlike the methods described in the state of the art, such as hydrothermal and solvothermal methods, the developed method allows growing and attaching the catalytically active layer onto the electrode support at low temperatures and with no need for a binder, such as Nafion^{®}, to be used. This has the advantages of (i) optimizing the electrical contact between the electrode and the active sites of the active material, (ii) avoiding burying active sites and (iii) making mass transport at the active sites easier, which results in more efficient catalysis at the electrode. In addition, the preparation method of the invention is easy to implement and requires simple manufacturing equipment. As an additional advantage, the method of the invention requires a low input of energy as the formation of the catalytically active layer material is promoted on or within the electrode support by the highly exothermal and spontaneous combustion method.

The inventors have found that the presence of the oxidation agent in the precursor mixture advantageously provides a particularly active electrode when said electrode is used in reduction reactions, such as the Hydrogen Evolution Reaction, if compared with the same electrode deprived of said oxidation agent. Without being bound to theory, it is believed that said oxidation agent oxidizes the metal of the support when in contact with it, thus producing holes, voids or vacancies in the structure of said support and increasing its available surface for hosting the catalyst layer. The increased surface of available catalyst is believed to contribute to an improved catalytic activity. Said holes and vacancies may further be occupied by species of the noble metal M by galvanic replacement.

In addition, and without being bound to any particular theory, it is believed that the formation of said holes, voids or vacancies in the structure of the support is concurrent with the reduction of the oxidation agent formation of species of the noble metal M, such as Pt(0). During the self-combustion reaction of the precursor mixture, leading typically to the formation of oxides of Ni and/or Co, it is believed that the formed species of the metal M interact or react with the components of the precursor mixture to produce a catalytically effective layer material whereby the species of the noble M and Ni and/or Co act synergistically. As shown in the examples below, the treatment of the electrode support with the noble metal M and the preparation of the oxide of Ni and/or Co by solution combustion act synergistically to produce a particularly effective electrode for alkaline HER. Without being bound to theory, it is believed that the high exothermal nature of the preparation of the oxide of Ni and/or Co by solution combustion produces metal oxide crystalline phases which separate the atoms of M and prevent the formation of clusters of M(0), thus contributing to the production of a larger number of active sites of M, and hereby increasing the actual effective active surface of M in the metal layer.

Thus, in a first aspect, the invention relates to a process for the preparation of an electrode comprising a support coated with a layer comprising a metal oxide selected from nickel oxide, iron oxide, cobalt oxide and a mixture thereof and a noble metal M selected from platinum, rhodium, rhenium, ruthenium and iridium, said process comprising the steps of:
(i) providing a support for electrode comprising a metal susceptible of being oxidized by the oxidation agent of the precursor mixture provided in step (ii-a) or the solution of step (ii-b);
in a first alternative,
(ii-a) providing a precursor mixture for solution combustion synthesis comprising (A) an oxidation agent comprising a noble metal M in its molecular formula selected from platinum, ruthenium and iridium and suitable for oxidizing the metal comprised in the support for electrode provided in step (i), (B) a fuel component, and (C) a source of a nitrate salt of one or more of nickel(II), cobalt(II) and iron(III) or a solvate thereof;
(iii-a) transferring the precursor mixture of step (ii-a) to the support of step (i) to produce an electrode precursor;
or, in a second alternative,
(ii-b) contacting the support for electrode provided in step (i) with (A) an oxidation agent comprising a noble metal M selected from platinum, rhodium, rhenium, ruthenium and iridium in its molecular formula and suitable for oxidizing the metal comprised in the support for electrode provided in step (i);
(ii-c) providing a precursor mixture for solution combustion synthesis comprising (B) a fuel component, and (C) a source of a nitrate salt of one or more of nickel(II), cobalt(II) and iron(lll) or a solvate thereof; and
(iii-b) transferring to the support of step (ii-b) the precursor mixture of step (ii-c) to produce an electrode precursor;
(iv) heating the electrode precursor obtained in step (iii-a) of the first alternative or in step (iii-b) of the second alternative at a temperature sufficiently high to cause the transferred precursor mixture to self-ignite and initiate a combustion reaction; said combustion reaction producing said layer;
wherein the molar ratio of fuel component to nitrate anion in the precursor mixture of step (ii) is such that it allows essentially for the formation of a metal oxide selected from nickel oxide, iron oxide, cobalt oxide and a mixture thereof from nickel(II) nitrate, iron nitrate and/or cobalt(II) nitrate during the combustion step of step (iv).

In a second aspect, the invention relates to an electrode obtainable by the method according to the first aspect of the invention.

In a third aspect, the invention relates to a device comprising at least one electrode according to the second aspect of the invention. The electrode of the invention is particularly useful in water electrolysis. Said device may thus be an electrolyser, such as an alkaline electrolyser (AE), an anion exchange membrane electrolyser (AEM) or proton exchange membrane electrolyser (PEM). Additionally, the findings in the invention might find application in different fields, such as the chloro-alkali and swimming pools (SP), desalinization, and water treatment markets.

In a fourth aspect, the invention relates to the use of an electrode according to the second aspect of the invention as cathode in alkaline water electrolysis. Said aspect may also be formulated as a method for the production of hydrogen comprising contacting water with an electrode as defined in the second aspect of the invention.

### BRIEF DESCRIPTION OF THE DRAWINGS

Fig. 1 describes the electrochemical activity of electrodes obtained according to the procedures described herein in Examples 1 to 6 and Comparative Examples 1 to 6.
Fig. 2 describes SEM and EDX analysis of a powder sample prepared by combustion of the precursor mixture of Example 1 in the conditions of Example 1.
Fig 3 describes TEM and EDX analysis of a powder sample prepared by combustion of the precursor mixture of Example 1 in the conditions of Example 1.
Fig. 4 describes the Powder X-Ray diffraction spectrum of a powder sample prepared by combustion of the precursor mixture of Example 1 in the conditions of Example 1.

### DETAILED DESCRIPTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the invention, any ranges given include both the lower and the upper end-points of the range. Ranges given, such as temperatures, times, molar ratio, volume ratio and the like, should be considered approximate (i.e. with a 5% margin of variation around indicated point), unless specifically stated.

In the context of the invention, the term "electrode" refers to a body comprising an electron conductive section, said body being suitable for closing an electrical circuit through a medium, such as a solid or an ionic solution, separating two electrodes. An electrode suitable for electrocatalysis is an electrode comprising a layer material that can be used as a catalyst in an electrochemical reaction, such as reduction or oxidation reactions. The method of the invention allows producing an electrode comprising a layer that is electrocatalytically active

In the context of the invention, the term "stable", when referring to an electrode support submitted to the method of the invention refers to the fact that the mechanical, physical, chemical and electronic properties of the electron conductive material itself are essentially the same after carrying out the method of the invention. In particular, it refers to the fact that it does not suffer any chemical transformation, such as melting or ignition.

In the context of the invention, the term "catalytically effective", when related to a material, refers to a material that provides a noticeable improvement in reaction rate, yield, selectivity, or efficiency, compared to a reaction conducted without the catalyst or with an insufficient amount of the catalyst. In the context of the invention, the term "catalytically effective material" particularly refers to material that provides a noticeable improvement in any one of the reaction rate, yield, selectivity, or efficiency of the alkaline Hydrogen Evolution Reaction, compared to the same reaction conducted without the catalyst or with a catalytically ineffective amount of the catalyst

The term "solution-combustion synthesis" is known in the art and refers to a method through which a solid material deriving from a metal is prepared by a thermally induced self-propagating exothermal combustion reaction between an oxidizing agent, such as typically a source of a nitrate salt of the metal, and a reducing agent, also named fuel component, the oxidizing and reducing agents being in a solution. The highly exothermal reaction generates sufficient heat to promote the formation of the nano-scaled material deriving from the metal comprised in the source of metal nitrate salt. In particular, in the context of the invention, the materials, such as nickel oxide, cobalt oxide, iron oxide or a mixture thereof prepared by solution-combustion synthesis comprise one or more crystalline phase.

In the context of the invention, the term "fuel component" refers to a compound that is soluble in the solvent of the solution-combustion synthesis, typically water, and has a low temperature of decomposition (for example, below 500 °C). Such fuel components are known in the art and include organic reductants, such as, for instance, alcohols, urea, thiourea, thiosemicarbazide, thiophene optionally substituted at any available position with a (C₁-C₆)alkyl group, citric acid, glycine, ethylene glycol, 1,2-dimethoxyethane, carbohydrates such as sucrose or glucose), carbohydrazide, hexamethylenetetramine, acetylacetone, oxalyldihydrazide, hydrazine, and ethylenediaminetetraacetic acid (EDTA). Salts and solvates of the above-cited compounds may also be used as fuels.

In the context of the invention, the term "self-ignition" refers to an event corresponding to the starting point of a spontaneous combustion reaction. Thus, in the context of the solution-combustion synthesis, the self-ignition temperature of a solution is the temperature at which the self-propagating exothermal reaction between the oxidant and the fuel component starts occurring.

In the context of the invention, the term "dip-coating" refers to a process or process step whereby a substrate for electrode, typically conductive, is immersed into a solution or suspension containing the desired precursor mixture of the active electrode catalyst or oxidating agent. The substrate is then withdrawn from the solution at a controlled rate, allowing a thin, uniform layer of the precursor mixture of the active electrode catalyst or oxidating agent to adhere to its surface. The thickness and uniformity of the resulting coating are influenced by factors such as the withdrawal speed, solution viscosity, and concentration of the components of the precursor mixture of the active electrode catalyst or oxidating agent.

The term "electrolyser" is known in the art and refers to an electrochemical device able to convert electrical energy into chemical energy or chemicals. A water electrolyser typically splits water into oxygen and hydrogen. Different types of electrolysers are known in the art, including, for instance, alkaline water electrolysers (AWE), proton exchange membrane electrolysers (PEM), anion exchange membrane electrolysers (AEM).

As defined above, a first aspect of the invention relates to a process for the preparation of an electrode comprising a support coated with a layer comprising a metal oxide selected from nickel oxide, iron oxide, cobalt oxide, and a mixture thereof and a noble metal M selected from platinum, rhodium, rhenium, ruthenium, and iridium, said process comprising the steps of:
(i) providing a support for electrode comprising a metal susceptible of being oxidized by the oxidation agent of the precursor mixture provided in step (ii-a) or the solution of step (ii-b);
in a first alternative,
(ii-a) providing a precursor mixture for solution combustion synthesis comprising (A) an oxidation agent comprising a noble metal M in its molecular formula selected from platinum, rhodium, rhenium, ruthenium and iridium and suitable for oxidizing the metal comprised in the support for electrode provided in step (i), (B) a fuel component, and (C) a source of a nitrate salt of one or more of nickel(II), cobalt(II), and iron(III) or a solvate thereof;
(iii-a) transferring the precursor mixture of step (ii-a) to the support of step (i) to produce an electrode precursor;
or, in a second alternative,
(ii-b) contacting the support for electrode provided in step (i) with (A) an oxidation agent comprising a noble metal M selected from platinum, rhodium, rhenium, ruthenium, and iridium in its molecular formula and suitable for oxidizing the metal comprised in the support for electrode provided in step (i);
(ii-c) providing a precursor mixture for solution combustion synthesis comprising (B) a fuel component, and (C) a source of a nitrate salt of one or more of nickel(II), cobalt(II) and iron(lll) or a solvate thereof; and
(iii-b) transferring to the support of step (ii-b) the precursor mixture of step (ii-c) to produce an electrode precursor;
(iv) heating the electrode precursor obtained in step (iii-a) of the first alternative or in step (iii-b) of the second alternative at a temperature sufficiently high to cause the transferred precursor mixture to self-ignite and initiate a combustion reaction; said combustion reaction producing said layer;
wherein the molar ratio of fuel component to nitrate anion in the precursor mixture of step (ii) is such that it allows essentially for the formation of a metal oxide selected from nickel oxide, iron oxide, cobalt oxide and a mixture thereof from nickel(II) nitrate, iron nitrate, and/or cobalt(II) nitrate during the combustion step of step (iv).

In preferred embodiments of the first aspect of the invention, the method of the invention further comprises the step of:
(v) washing the composition obtained in step (iv) with a polar solvent, and
(vi) optionally, further submitting the composition obtained in step (iv) or in step (v) to steps (ii-a) or (ii-c) and (iv) and, optionally, to further steps (v) and/or (vi).

The product of step (v) may further be washed with a polar solvent as it allows removing by-products of the combustion synthesis non-adhered to the electron conductive material of the carrier.

Said washing step (v) may be carried out using a polar solvent selected from the group consisting of acetone, water, methanol, ethanol, isopropanol, and mixtures thereof. Optionally, said washing step may further be carried out using sonication with ultra-sounds, e.g. using acetone as a polar solvent.

Step (i) of the process of the invention relates to providing a support for electrode comprising a metal susceptible of being oxidized by the oxidation agent of the precursor mixture provided in step (ii-a) or the solution of step (ii-b). Suitable metal comprising supports for electrodes are known in the art. The support of the electrode is normally connected to an electric circuit, for example, through a nickel wire connecting the support with the other elements of the circuit.

In particular embodiments of the first aspect of the invention, step (i) comprises providing a support for electrode comprising a metal susceptible of being oxidized by the oxidation agent of the precursor mixture provided in step (ii-a) or the solution of step (ii-b); said support being selected from the group consisting of metal mesh, metal felt, metal foam, metal foil and transparent conducting oxides. Meshes, foils, felts and foams consisting essentially of metal alloys such as stainless steel may also be used.

In further particular embodiments of the first aspect of the invention, step (i) comprises providing a support for electrode comprising a metal susceptible of being oxidized by the oxidation agent of the precursor mixture provided in step (ii-a) or the solution of step (ii-b); said support being selected from the group consisting of the stainless steel, metal mesh, metal foam, metal foil, and metal felt.

The metal of the support provided in step (i) is such that it susceptible of being oxidized by an oxidation agent comprising a noble metal M in its molecular formula and as defined above. Suitable metals for forming the support thus include metals with suitable reducing activity, such as nickel, titanium, iron, steel, and aluminium. The supports comprising said metals may be in the form of a foam, mesh, felt, or foil. Alloys of metals, such as steel, nickel-iron or stainless steel may be used.

In more particular embodiments of the first aspect of the invention, step (i) comprises providing a support that is selected from the group consisting of nickel mesh, nickel felt, nickel foam, and nickel foil.

In other more particular embodiments of the first aspect of the invention, step (i) comprises providing a support selected from the group consisting of iron foam, aluminium foam, titanium foam, nickel foam, steel foam, and nickel-iron foam.

In other preferred embodiments, the support provided in step (i) is nickel foam.

The metal or alloy forming the support provided in step (i) preferably has a standard redox potential lower than +0.45 V (vs Standard Hydrogen Electrode); more preferably lower than 0.3 V vs SHE ;and even more preferably lower than 0.25 V.

The metal or alloy forming the support provided in step (i) preferably has a standard redox potential of between +0.15 V and +0.45 V (vs Standard Hydrogen Electrode); more preferably of between +0.25 V and +0.45 vs SHE.

The process of the first aspect of the invention comprises in a first alternative the step (ii-a) of providing a precursor mixture for solution combustion synthesis comprising a fuel component, a source of a nitrate salt of one or more of nickel(II), cobalt(II), and iron(III) or a solvate thereof and an oxidation agent comprising a metal M in its molecular formula selected from the group consisting of platinum, iridium, rhodium, rhenium, and ruthenium and suitable for oxidizing the metal comprised in the support for electrode provided in step (i).

The precursor mixture is in particular suitable for solution combustion synthesis, and as such, preferably comprises a sufficient amount of fuel allowing for the consumption of substantially all the source of a nitrate salt of one or more of nickel(II), cobalt(II), and iron(III) or a solvate thereof comprised in the precursor mixture.

The precursor mixture of any of steps (ii-a) or (ii-c) of the method of the first aspect of the invention also comprises a fuel component suitable for the solution-combustion synthesis. Suitable fuel components are readily available organic compounds exhibiting low temperature of decomposition. Such compounds are well-known in the field of solution combustion synthesis and shall become apparent to the skilled person upon reduction to practice of the invention on the basis of common general knowledge.

In more particular embodiments of the first aspect of the invention, the precursor mixture of step any of steps (ii-a) or (ii-c) comprises a fuel component suitable for the solution-combustion synthesis that is an organic compound satisfying at least one, preferably all, of the following conditions:
- the fuel component is an organic compound of molecular formula CₗHₘOₙNₖSⱼ wherein j is an integer comprised between 0 and 2, k is an integer comprised between 0 and 5, l is an integer comprised between 1 and 10, m is an integer comprised between 4 and 50, n is an integer comprised between 0 and 5;
- the temperature of thermal decomposition of the fuel component is below 500 °C;
- the fuel component has a molecular weight below 300 grams per mole of fuel component.

The fuel component may further be a chelating agent for nickel, iron or cobalt. This is for instance the case of ethylene glycol, citric acid and citrate ions.

In even more particular embodiments of the first aspect of the invention, the precursor mixture of any of steps (ii-a) or (ii-c) comprises a fuel component suitable for the solution-combustion synthesis that is selected from the group consisting of alcohols, urea, thiourea, thiosemicarbazide, thiophene optionally substituted at any available position with a (C₁-C₆)alkyl group, citric acid, glycine, ethylene glycol, 1,2-dimethoxyethane, sugars (sucrose, glucose), carbohydrazide, hexamethylenetetramine, acetylacetone, oxalyldihydrazide, hydrazine, ethylenediaminetetraacetic acid, and mixtures thereof. Salts and solvates of the aforementioned fuels may also be used.

In even more particular embodiments of the first aspect of the invention, the precursor mixture of any of steps (ii-a) or (ii-c) comprises a fuel component suitable for the solution-combustion synthesis that is selected from the group consisting of urea, thiourea, thiophene optionally substituted at any available position with a (C₁-C₆)alkyl group, thiosemicarbazide, citric acid, glycine, ethylene glycol, 1,2-dimethoxyethane, acetylacetone, hexamethylenetetramine, and mixtures thereof. Salts and solvates of the aforementioned fuels may also be used.

In other more particular embodiments of the first aspect of the invention, the precursor mixture of any of steps (ii-a) or (ii-c) comprises a fuel component suitable for the solution-combustion synthesis that is selected from the group consisting of urea, citric acid, glycine, ethylene glycol, 1,2-dimethoxyethane, hexamethylenetetramine, acetylacetone, and mixtures thereof. Salts and solvates of the aforementioned fuels may also be used.

In other more particular embodiments of the first aspect of the invention, the precursor mixture of any of steps (ii-a) or (ii-c) comprises a fuel component suitable for the solution-combustion synthesis that is selected from the group consisting of urea, citric acid, glycine, ethylene glycol, acetylacetone, and mixtures thereof. Salts and solvates of the aforementioned fuels may also be used.

In other more particular embodiments of the first aspect of the invention, the precursor mixture of any of steps (ii-a) or (ii-c) comprises a fuel component suitable for the solution-combustion synthesis that is selected from the group consisting of urea, citric acid, glycine, ethylene glycol, acetylacetone and mixtures thereof. Salts and solvates of the aforementioned fuels may also be used.

In other more particular embodiments of the first aspect of the invention, the precursor mixture of any of steps (ii-a) or (ii-c) comprises a fuel component suitable for the solution-combustion synthesis that is selected from ethylene glycol, citric acid and salts thereof. Suitable salts of citric acid include water-soluble salts of citric acid, such as alkaline or ammonium salts of citric acid. Alkaline salts comprise in particular sodium, lithium, potassium, or caesium salts.

In further particular embodiments of the first aspect of the invention, the source of a nitrate salt of one or more of nickel(II), cobalt(II), and iron(III) in the precursor mixture of any of steps (ii-a) or (ii-c) is selected from the group consisting of a nitrate salts of nickel (II), iron (III), and/or cobalt (II) and a combination of a salt of formula M'Y with nitric acid or a nitrate salt of an organic cation or an inorganic cation wherein M' is selected from nickel(II), iron(III) and cobalt(II) and Y is an anion selected from the group consisting of halide, (C₁-C₆)alkylcarboxylate, (C₁-C₆)alkyloxide, formate, acetylacetonate, phosphate, trifluoromethanesulfonate, sulphate, oxalate, carbonate, hydrogencarbonate, methanesulfonate, perchlorate, hydroxide, and sulfamate.

When the source of a nitrate salt of one or more of nickel(II), cobalt(II) and iron(III) in the precursor mixture of any of steps (ii-a) or (ii-c) is a combination of a salt of formula M'Y with nitric acid or a nitrate salt of an inorganic cation as defined above, suitable inorganic cations of the nitrate salt may be ammonium, sodium, lithium, potassium, caesium, calcium, magnesium, and barium.

When the source of a nitrate salt of one or more of nickel(II), cobalt(II) and iron(III) in the precursor mixture of any of steps (ii-a) or (ii-c) is a combination of a salt of formula M'Y with nitric acid or a nitrate salt of an organic cation as defined above, suitable organic cations of the nitrate salt may be quaternary ammonium salts, such as tetra(C₁-C₆)alkyl ammonium.

When the source of a nitrate salt of one or more of nickel(ll), cobalt(ll) and iron(lll) in the precursor mixture of any of steps (ii-a) or (ii-c) is a combination of a salt of formula M'Y with nitric acid or a nitrate salt of an inorganic cation or an organic cation as defined above, the amount of nitric acid or nitrate salt in the precursor mixture is twice the amount of nickel(II) and/or cobalt(II), and thrice the amount of iron(III).

In further particular embodiments, the precursor mixture of any of steps (ii-a) or (ii-c) comprises a source of a nitrate salt of one or more of nickel(II), cobalt(ll) and iron(III) that is selected from the group consisting of nickel (II) nitrate or a solvate thereof, cobalt(II) nitrate or a solvate thereof, iron(III) nitrate or a solvate thereof and mixtures thereof.

In a preferred embodiment, the precursor mixture of any of steps (ii-a) or (ii-c) comprises a source of a nitrate salt of nickel(II) that is nickel (II) nitrate or a solvate thereof, such as a hydrate.

In an even more preferred embodiment, the process of the first aspect of the invention is one wherein the precursor mixture of any of steps (ii-a) or (ii-c) comprises a source of a nitrate salt of one or more of nickel(II), cobalt(II), and iron(III) that is nickel (II) nitrate or a solvate thereof, such as a hydrate, and wherein the support provided in step (i) comprises nickel; preferably, said support is nickel foam.

The precursor mixture of any of steps (ii-a) or (ii-c) comprises a source of nitrate salt of nickel(II), iron (III) and/or cobalt(II), and a fuel component wherein the molar ratio of fuel component to nitrate anion in the precursor mixture of any of steps (ii-a) or (ii-c) is such that it allows essentially for the formation of the layer material during the combustion step of step (iv). The skilled in the art person will easily recognize the amount of fuel component required for preparing essentially the layer material by writing down the reaction of conversion of the nitrate salt of nickel(II), iron (III), or cobalt(II) to the layer material on the one hand, and the combustion reaction of the fuel component on the other hand. While the reaction of conversion of the nitrate salt of nickel(II), iron (III), and/or cobalt(II) to the layer material releases oxygen, the combustion reaction of the fuel component requires oxygen. The optimal molar ratio of fuel component to nitrate anion in the precursor mixture of step (ii-a) or step (ii-c) is such that no external oxygen is required to complete the combustion of the fuel component present in the precursor mixture of step (ii-a) or step (ii-c), that is, the optimal ratio of fuel component to nitrate ion is one wherein the amount of oxygen released by the decomposition of nickel(II), iron (III), and/or cobalt(II) is equal to the amount of oxygen required for the combustion of the fuel component.

The reaction of formation of the active material from a nitrate salt of a metal M'(II) by solution-combustion synthesis using a fuel component of molecular formula CₗHₘOₙNₖ satisfies the following equations of chemical reactions A) and B):

A) M'(NO₃)₂ → N₂ + (5/2) O₂ + M'O

B) β CₗHₘOₙNₖ + β ((4l + m - 2n)/4) O₂ → βl CO₂ + (βm/2) H₂O + (βk/2) N₂

wherein β is a rational number comprised from 0.01 to 10 reflecting the number of molar equivalents of fuel component with respect to the source of nitrate salt M' engaged in the reaction and wherein l, m, n, and k are respectively the number of atoms of C, H, O and N in the molecular formula of the fuel component.

Thus, the optimal molar ratio of fuel component to nitrate anion in the precursor mixture of step (ii-a) or (ii-c) - for which the amount of oxygen released in equation A is equal to the amount of oxygen required in equation B - is such that the following equation 1 is satisfied: ${ϕ}^{1} = \frac{5}{4 l + m - 2 n}$ wherein ϕ¹ is defined as the optimal number of moles of fuel component per each mole of nitrate in the precursor mixture of step (ii-a) or of step (ii-c).

In particular embodiments of the first aspect of the invention, the precursor mixture of step (ii-a) or (ii-c) comprises a source of a nitrate salt of a metal M' as defined above, and a fuel component of formula CₗHₘOₙNₖ wherein k is an integer comprised between 0 and 5, l is an integer comprised between 1 and 10, m is an integer comprised between 4 and 50, n is an integer comprised between 0 and 5.

In other particular embodiments of the first aspect of the invention, the method of the invention allows preparing an electrode comprising an layer material consisting essentially of optionally doped metal oxides, and the precursor mixture of step (ii-a) or step (ii-c) comprises a source of a nitrate salt of a metal M' as defined above, and a fuel component of formula CₗHₘOₙNₖ wherein the number of moles of fuel component per each mole of nitrate in the precursor mixture of step (ii-a) or step (ii-c)is comprised between 0.8 and 1.2 times the value of ϕ¹, wherein ϕ¹ is as defined above; and wherein, preferably, k is an integer comprised between 0 and 5, l is an integer comprised between 1 and 10, m is an integer comprised between 4 and 50, and n is an integer comprised between 0 and 5.

In other particular embodiments of the first aspect of the invention, the method of the invention allows preparing an electrode comprising an layer material consisting essentially of optionally doped metal oxides, and the precursor mixture of step (ii-a) or step (ii-c) comprises a source of a nitrate salt of a metal M' as defined above, and a fuel component of formula CₗHₘOₙNₖ wherein the number of moles of fuel component per each mole of nitrate in the precursor mixture of step (ii-a) or step (ii-c) is comprised between 0.9 and 1.1 times the value of ϕ¹, wherein ϕ¹ is as defined above; and wherein, preferably, k is an integer comprised between 0 and 5, l is an integer comprised between 1 and 10, m is an integer comprised between 4 and 50, and n is an integer comprised between 0 and 5.

In other particular embodiments of the first aspect of the invention, the method of the invention allows preparing an electrode comprising an layer material consisting essentially of optionally doped metal oxides, and the precursor mixture of step (ii-a) or step (ii-c) comprises a source of a nitrate salt of a metal M' as defined above, and a fuel component of formula CₗHₘOₙNₖ wherein the number of moles of fuel component per each mole of nitrate in the precursor mixture of step (ii-a) or step (ii-c) is comprised between 0.9 and 1.0 time the value of ϕ¹, wherein ϕ¹ is as defined above; and wherein, preferably, k is an integer comprised between 0 and 5, l is an integer comprised between 1 and 10, m is an integer comprised between 4 and 50, and n is an integer comprised between 0 and 5.

In more particular embodiments of the first aspect of the invention, the precursor mixture of step (ii-a) or (ii-c) comprises a fuel component that is selected from the group consisting of urea, glycine, citric acid, hexamethylenetetramine, 1,2-dimethoxyethane, acetylacetone, and ethylene glycol wherein the number of moles of fuel component per each mole of nitrate in the precursor mixture of step (ii-a) or (ii-c) is comprised between 0.8 and 1.2 times the value of ϕ¹; preferably between 0.9 and 1.1 times the value of ϕ¹; more preferably between 0.9 and 1.0 time the value of ϕ¹; wherein ϕ¹ is as defined above.

In more particular embodiments of the first aspect of the invention, the precursor mixture of step (ii-a) or (ii-c) comprises a fuel component that is selected from the group consisting of ethylene glycol, citric acid or a salt thereof, wherein the number of moles of fuel component per each mole of nitrate in the precursor mixture of step (ii-a) or (ii-c) is comprised between 0.8 and 1.2 times the value of ϕ¹; preferably between 0.9 and 1.1 times the value of ϕ¹; more preferably between 0.9 and 1.0 time the value of ϕ¹; wherein ϕ¹ is as defined above.

In more particular embodiments of the first aspect of the invention, the precursor mixture of step (ii-a) or (ii-c) comprises a fuel component that is citric acid or a salt thereof, wherein the number of moles of fuel component per each mole of nitrate in the precursor mixture of step (ii-a) or (ii-c) is comprised between 0.8 and 1.2 times; preferably between 0.9 and 1.1 times the value of ϕ¹; more preferably between 0.9 and 1.0 time the value of ϕ¹; wherein ϕ¹ is as defined above.

In more particular embodiments of the first aspect of the invention, the precursor mixture of step (ii-a) or (ii-c) comprises a fuel component that is ethylene glycol, wherein the number of moles of fuel component per each mole of nitrate in the precursor mixture of step (ii-a) or (ii-c) is comprised between 0.8 and 1.2 times; preferably between 0.9 and 1.1 times the value of ϕ¹ ; more preferably between 0.9 and 1.0 time the value of ϕ¹; wherein ϕ¹ is as defined above.

Table 1 below provides the value of φ¹ for common fuels known in the art:

**Table 1**

| Fuel | Urea | Glycine | Citric acid | Hexamethylenetetramine |
|---|---|---|---|---|
| ϕ¹ | 5/6 | 5/9 | 5/18 | 5/36 |

| Fuel | Acetylacetone | Ethylene glycol | 1,2-dimethoxyethane | |
|---|---|---|---|---|
| ϕ¹ | 5/24 | 1/2 | 5/22 | |

In more particular embodiments of the first aspect of the invention, the precursor mixture of step (ii-a) or (ii-c) comprises nickel (II) nitrate and a fuel component as defined in any of the embodiments described above and in an amount as described in any of the embodiments described above.

In further embodiments of the first aspect of the invention, the precursor mixture of steps (ii-a) or (ii-c) comprises metals in a concentration of between 0.05 M and 0.5 M; preferably of between 0.1 M and 0.2 M; more preferably of about 0.5 M. When the precursor mixture further comprises an oxidant comprising a noble metal M, such as in the first alternative of the process of the first aspect of the invention, the above-mentioned concentration of metals refers to the sum of the respective concentrations of the nickel(II), iron(III), and/or cobalt(II) and the metal M.

In further embodiments of the first aspect of the invention, the precursor mixture of steps (ii-a) or (ii-c) is an aqueous solution.

In the first alternative of the first aspect of the invention, the precursor mixture of step (ii-a) further comprises an oxidation agent comprising a metal M in its molecular formula selected from the group consisting of platinum, iridium, rhodium, rhenium, and ruthenium and suitable for oxidizing the metal comprised in the support for electrode provided in step (i). Preferably, M is platinum.

In preferred embodiments, the oxidation agent of step (ii-b) or comprised in the precursor mixture of step (ii-a) or is one having a redox potential of at least + 0.50 V vs SHE.

In preferred embodiments, the oxidation agent of step (ii-b) or comprised in the precursor mixture of step (ii-a) is one wherein M is selected from the group consisting of rhenium(VII), platinum(IV), iridium(IV), ruthenium(IV), ruthenium(III), iridium(III), rhodium(III), platinum(II), and ruthenium(II).

In more preferred embodiments, the oxidation agent of step (ii-b) comprised in the precursor mixture of step (ii-a) is one wherein M is selected from the group consisting of rhenium(VII), platinum(IV), iridium(IV), and ruthenium(IV), and rhodium(III); preferably, M is platinum(IV).

In preferred embodiments, the oxidation agent of step (ii-b) or comprised in the precursor mixture of step (ii-a) is one wherein M is platinum.

In other preferred embodiments, the oxidation agent of step (ii-b) or comprised in the precursor mixture of step (ii-a) is one wherein M is selected from the group consisting of platinum(IV) and platinum(II); preferably, M is platinum(IV).

In preferred embodiments, the oxidation agent of step (ii-b) or comprised in the precursor mixture of step (ii-a) is one having a redox potential of at least + 0.50 V vs SHE and wherein M is selected from the group consisting of rhenium(VII), platinum(IV), iridium(IV), ruthenium(IV), rhodium(III), ruthenium(III), iridium(III), and platinum(II).

In preferred embodiments, the oxidation agent of step (ii-b) or comprised in the precursor mixture of step (ii-a) is one having a redox potential of at least + 0.50 V vs SHE and wherein M is selected from the group consisting of rhenium(VII), platinum(IV), platinum(II), iridium(IV), ruthenium(IV), and rhodium(III); preferably, M is platinum(IV).

In preferred embodiments, the oxidation agent of step (ii-b) or comprised in the precursor mixture of step (ii-a) is one having a redox potential of at least + 0.50 V vs SHE and wherein M is selected from the group consisting of platinum(IV), and platinum(II); preferably, M is platinum(IV).

In preferred embodiments, the oxidation agent of step (ii-b) or comprised in the precursor mixture of step (ii-a) is selected from perrhenate salts, tetra- or hexachloroplatinate salts, hexachloroplatinic acid, tetra- or hexachlororuthenate salts, hexachlororuthenic acid, hexachlororhodate salts, tetra- or hexachloroiridate salts, and hexachloroiridic acid.

In other preferred embodiments, the oxidation agent of step (ii-b) or comprised in the precursor mixture of step (ii-a) is a iodide salt.

In preferred embodiments, the oxidation agent of step (ii-b) or comprised in the precursor mixture of step (ii-a) is selected from tetra- or hexachloroplatinate salts and hexachloroplatinic acid. Particularly preferred tetra- or hexachloroplatinate salts include alkaline and alkaline earth salts of tetra- or hexachloroplatinate, such as potassium and sodium salts. Suitable further such salts include, and are not limited to, alkaline salts, such as salts of sodium, lithium or potassium, or ammonium salts. Other salts known in the art may also be used.

In preferred embodiments, the oxidation agent of step (ii-b) or comprised in the precursor mixture of step (ii-a) is selected from the group consisting of hexachloroplatinic acid, potassium tetra- or hexachloroplatinate and platinum(II) iodide.

In further preferred embodiments, the process of the first aspect of the invention is one wherein the support of step (i) comprises nickel and the oxidation agent of step (ii-b) or comprised in the precursor mixture of step (ii-a) is one wherein M is selected from the group consisting of platinum(IV), iridium(IV), ruthenium(IV), platinum(II), iridium(III), rhenium(VII), rhodium(III), and ruthenium(III).

In further preferred embodiments, the process of the first aspect of the invention is one wherein the support of step (i) comprises nickel and the oxidation agent of step (ii-b) or comprised in the precursor mixture of step (ii-a) is one wherein M is selected from the group consisting of platinum(IV) and platinum(II).

In further preferred embodiments, the process of the first aspect of the invention is one wherein the support of step (i) comprises nickel and the oxidation agent of step (ii-b) or comprised in the precursor mixture of step (ii-a) is selected from the group consisting of tetra- or hexachloroplatinate salts, hexachloroplatinic acid, tetra- or hexachlororuthenate salts, hexachlororuthenic acid, hexachlororhodate salts, perrhenate salts, tetra- or hexachloroiridate salts, and hexachloroiridic acid; preferably it is selected from the group consisting of hexachloroplatinic acid, potassium tetra- or hexachloroplatinate, and platinum(II) iodide.

In preferred embodiments of the first alternative of the first aspect of the invention, the precursor mixture of step (ii-a) of the first alternative is one wherein the molar ratio of the nickel(ll) nitrate salt, iron(lll) nitrate salt, and/or cobalt(ll) nitrate salt to the molar amount of M in the oxidation agent is comprised of from 100:1 to 10:1; preferably from 30:1 to 10:1.

In further preferred embodiments of the first alternative of the first aspect of the invention, the precursor mixture of step (ii-a) of the first alternative is one wherein the concentration of the oxidation agent is comprised between 5 mM and 30 mM; preferably of between 5 mM and 15 mM; more preferably it is of about 7 mM. This is particularly the case when step (iii-a) is carried out by dip coating.

In preferred embodiments of the second alternative of the first aspect of the invention, step (ii-b) comprises contacting the support with a solution of the oxidation agent wherein the concentration of the oxidation agent is comprised between 5 mM and 30 mM; preferably of between 5 mM and 15 mM; more preferably it is of about 7 mM. This is particularly the case when step (iii-b) is carried out by dip coating.

In further preferred embodiments of the first alternative of the first aspect of the invention, the precursor mixture of step (ii-a) of the first alternative is one wherein the concentration of the oxidation agent is comprised between 5 mM and 30 mM; preferably of between 15 mM and 30 mM; more preferably it is of about 25 mM. This is particularly the case when step (iii-a) is carried out by spray coating.

In preferred embodiments of the second alternative of the first aspect of the invention, step (ii-b) comprises contacting the support with a solution of the oxidation agent wherein the concentration of the oxidation agent is comprised between 5 mM and 30 mM; preferably of between 15 mM and 30 mM; more preferably it is of about 25 mM. This is particularly the case when step (iii-a) is carried out by spray coating.

In more preferred embodiments of the first alternative of the first aspect of the invention, the precursor mixture of step (ii-a) is one wherein at least two of the following conditions, preferably all of the following conditions, are satisfied:
- the oxidation agent is selected from the group consisting of hexachloroplatinic acid, potassium iodide and a tetra- or hexachloroplatinate salt;
- the source of nitrate salt comprises nickel(ll) nitrate;
- the mixture is an aqueous solution;
- the fuel is selected from citric acid, a citrate salt and ethylene glycol;
- the molar ratio of the nickel(II) nitrate salt, iron(III) nitrate salt and/or cobalt(II) nitrate salt to the molar amount of M in the oxidation agent in the precursor mixture of step (ii-a) of the first alternative is comprised of from 30:1 to 10:1;
- the fuel component is of formula CₗHₘOₙNₖ and the number of moles of fuel component per each mole of nitrate in the precursor mixture of step (ii-a) is comprised between 0.9 and 1.0 times the value of ϕ¹, wherein ϕ¹ is as defined above; and wherein, preferably, k is an integer comprised between 0 and 5, l is an integer comprised between 1 and 10, m is an integer comprised between 4 and 50, and n is an integer comprised between 0 and 5; and/or
- the precursor mixture comprises metals in a concentration of between 0.05 M and 0.5 M; preferably of between 0.1 M and 0.2 M; more preferably of about 0.15 M.

The first alternative of the first aspect of the invention further comprises the step (iii-a) of transferring the precursor mixture of step (ii-a) to the support of step (i) to produce an electrode precursor. The skilled person will readily identify optimal conditions and methods to carry out step (iii-a) on the basis of common general knowledge.

Suitable methods for transferring the precursor mixture of the precursor mixture of step (ii-a) to the support of step (i) comprise dip-coating, spray coating, spin coating, blade coating, slot-die coating, gravure printing, inkjet printing, chemical bath deposition, and immersion. Preferably, the transferring step is carried out by dip-coating.

In preferred embodiments, step (iii-a) of the first alternative of the first aspect of the invention comprises contacting the support for electrode provided in step (i) with the solution comprising the oxidation agent for a duration of between 0.5 and 1.5 minutes; preferably for a period of about one minute.

As mentioned above, the second alternative of the first aspect of the invention comprises the following steps:
(ii-b) contacting the support for electrode provided in step (i) with an oxidation agent comprising a metal M in its molecular formula and suitable for oxidizing the metal comprised in the support for electrode provided in step (i);
(ii-c) providing a precursor mixture comprising a fuel component, a source of a nitrate salt of one or more of nickel(II), cobalt(II), and iron(III) or a solvate thereof; and (iii-b) transferring to the support of step (ii-b) the precursor mixture of step (ii-c) to produce an electrode precursor;

In preferred embodiments, step (ii-b) of the second alternative of the first aspect of the invention comprises contacting the support with a solution of the oxidation agent for a duration of between 0.5 and 1.5 minutes; preferably for a period of about one minute.

In preferred embodiments of the second alternative of the first aspect of the invention, step (ii-b) of the second alternative of the first aspect of the invention comprises contacting the support with an aqueous solution of the oxidation agent for a duration of between 0.5 and 1.5 minutes; preferably for a period of about one minute.

The oxidation agent of the solution of step (ii-b) is preferably defined in the same manner as the oxidation agent of the solution of step (ii-a).

The fuel component of the precursor mixture of step (ii-c) of the second alternative of the first aspect of the invention is as defined above. The source of nitrate salt of nickel(II) and/or copper(II) of the precursor mixture of step (ii-c) of the second alternative of the first aspect of the invention is as defined above. Similarly, the relative amounts of fuel component and source of nitrate salt of nickel(II) and/or copper(II) of the precursor mixture of step (ii-c) are as defined above.

In preferred embodiments of the second alternative of the first aspect of the invention, step (iii-b) is carried out by a method selected from the group consisting of dip-coating, spray coating, spin coating, blade coating, slot-die coating, gravure printing, inkjet printing, chemical bath deposition, and immersion. Any additional method commonly known in the art for transferring a liquid composition on the surface of a substrate may be used. Preferably, step (iii-b) is carried out by dip-coating or spray-coating, more preferably by dip-coating. The skilled person will readily identify optimal conditions to carry out step (iii-b) on the basis of common general knowledge.

In preferred embodiments, step (iii-b) of the second alternative of the first aspect of the invention comprises contacting the support for electrode provided in step (i) with the solution provided in step (ii-c) for a duration of between 0.5 and 1.5 minutes; preferably for a period of about one minute.

Step (iv) of the process of the first aspect of the invention comprises heating the electrode precursor obtained in step (iii-a) of the first alternative or in step (iii-b) of the second alternative at a temperature sufficiently high to cause the transferred precursor mixture to self-ignite and initiate a combustion reaction.

Such heating step may be carried out by using a heating ramp or an isotherm. When a heating ramp is used, it is preferably of two degrees Celsius per minute for temperatures above 100 °C. This advantageously allows determining the temperature of self-ignition of the electrode precursor with an acceptable degree of accuracy.

When the temperature of self-ignition of the electrode precursor is known, an isotherm may be used, for instance by introducing the electrode precursor in a muffle furnace, or oven able to reach a temperature equal to or higher than the temperature of self-ignition or irradiating the electrode precursor with an infrared lamp up to a temperature equal to or above the temperature of self-ignition. This method is preferred as it allows preparing the electrode in a fast manner.

In particular embodiments, the method of the first aspect of the invention comprises the step (iv) of heating the electrode precursor obtained in step (iii-a) of the first alternative or in step (iii-b) of the second alternative at a temperature of at least 180 °C; preferably at a temperature comprised between 200 °C and 520 °C; more preferably at a temperature comprised between 200 °C and 400 °C; and even more preferably at a temperature of 250 °C. This has the advantage of requiring a low energy input in the manufacture of the electrode.

In other particular embodiments, the method of the first aspect of the invention comprises the step (iv) of heating the electrode precursor obtained in step in step (iii-a) of the first alternative or in step (iii-b) for a period of time of at least 4 minutes; preferably for a period of time from 5 to 20 minutes; preferably of about 5 minutes. Such low reaction time is enabled by the fact that self-combustion reactions are self-propagating and generate a sufficient amount of energy for the reaction to proceed to completion without the need for a further input of energy.

Preferred and particular embodiments described above for each one of the process steps of the first and second alternatives of the process of the first aspect of the invention may be combined to provide the embodiments of the process of the first aspect of the invention encompassed by the present invention.

In particular, the process of the first aspect of the invention is one wherein:
- the support of step (i) comprises nickel; preferably it is nickel foam;
- the oxidation agent of step (ii-b) or of the precursor mixture of step (ii-a) is selected from the group consisting of perrhenates salts, tetra- or hexachloroplatinate salts, hexachloroplatinic acid, tetra- or hexachlororuthenate salts, hexachlororuthenic acid, hexachlororhodate salts, tetra- or hexachloroiridate salts, and hexachloroiridic acid; preferably it is selected from the group consisting of hexachloroplatinic acid, potassium tetra- or hexachloroplatinate, and platinum(II) iodide;
- the source of nitrate salt of nickel(II), iron(III) and/or cobalt(ll) of the precursor mixture of step (ii-a) or of step (ii-c) is nickel(II) nitrate or a hydrate thereof; and
- the fuel component of the precursor mixture of step (ii-a) or of step (ii-c) is selected from the group consisting of urea, citric acid, glycine, ethylene glycol, 1,2-dimethoxyethane, hexamethylenetetramine, acetylacetone, and mixtures thereof; preferably, the fuel component is selected from the group consisting of ethylene glycol, citric acid and salts thereof.

In more preferred embodiments, the process of the first aspect of the invention is one wherein:
- the support of step (i) comprises nickel; preferably it is nickel foam;
- the oxidation agent of step (ii-b) or of the precursor mixture of step (ii-a) is selected from the group consisting of perrhenates salts, tetra- or hexachloroplatinate salts, hexachloroplatinic acid, tetra- or hexachlororuthenate salts, hexachlororuthenic acid, hexachlororhodate salts, tetra- or hexachloroiridate salts, and hexachloroiridic acid; preferably it is selected from the group consisting of hexachloroplatinic acid, potassium tetra- or hexachloroplatinate, and platinum(II) iodide;
- the source of nitrate salt of nickel(II), iron(III), and/or cobalt(ll) of the precursor mixture of step (ii-a) or of step (ii-c) is nickel(ll) nitrate or a hydrate thereof;
- the fuel component of the precursor mixture of step (ii-a) or of step (ii-c) is selected from the group consisting of urea, citric acid, glycine, ethylene glycol, 1,2-dimethoxyethane, hexamethylenetetramine, acetylacetone, and mixtures thereof; preferably, the fuel component is selected from the group consisting of ethylene glycol, citric acid and salts thereof; and
- the number of moles of fuel component per each mole of nitrate in the precursor mixture of step (ii-a) or step (ii-c) is comprised between 0.9 and 1.1 times the value of ϕ¹, wherein ϕ¹ is as defined above.

In more preferred embodiments, the process of the first aspect of the invention is one wherein:
- the support of step (i) comprises nickel; preferably it is nickel foam;
- the oxidation agent of step (ii-b) or of the precursor mixture of step (ii-a) is selected from the group consisting of perrhenates salts, tetra- or hexachloroplatinate salts, hexachloroplatinic acid, tetra- or hexachlororuthenate salts, hexachlororuthenic acid, hexachlororhodate salts, tetra- or hexachloroiridate salts, and hexachloroiridic acid; preferably it is selected from the group consisting of hexachloroplatinic acid, potassium tetra- or hexachloroplatinate and platinum(II) iodide;
- the source of nitrate salt of nickel(II), iron(III), and/or cobalt(II) of the precursor mixture of step (ii-a) or of step (ii-c) is nickel(ll) nitrate or a hydrate thereof;
- the fuel component of the precursor mixture of step (ii-a) or of step (ii-c) is selected from the group consisting of urea, citric acid, glycine, ethylene glycol, 1,2-dimethoxyethane, hexamethylenetetramine, acetylacetone, and mixtures thereof; preferably, the fuel component is selected from the group consisting of ethylene glycol, citric acid and salts thereof; and
- the precursor mixture of steps (ii-a) or (ii-c) comprises metals in a concentration of between 0.05 M and 0.7 M; preferably of between 0.1 M and 0.2 M; more preferably of about 0.15 M.

In more preferred embodiments, the process of the first aspect of the invention is one wherein:
- the support of step (i) comprises nickel; preferably it is nickel foam;
- the oxidation agent of step (ii-b) or of the precursor mixture of step (ii-a) is selected from the group consisting of perrhenate salts, tetra- or hexachloroplatinate salts, hexachloroplatinic acid, tetra- or hexachlororuthenate salts, hexachlororuthenic acid, hexachlororhodate salts, tetra- or hexachloroiridate salts, and hexachloroiridic acid; preferably it is selected from the group consisting of hexachloroplatinic acid, potassium tetra- or hexachloroplatinate, and platinum(II) iodide;
- the source of nitrate salt of nickel(II), iron(III), and/or cobalt(II) of the precursor mixture of step (ii-a) or of step (ii-c) is nickel(ll) nitrate or a hydrate thereof;
- the fuel component of the precursor mixture of step (ii-a) or of step (ii-c) is selected from the group consisting of urea, citric acid, glycine, ethylene glycol, 1,2-dimethoxyethane, hexamethylenetetramine, acetylacetone, and mixtures thereof; preferably, the fuel component is selected from the group consisting of ethylene glycol, citric acid and salts thereof;
- the number of moles of fuel component per each mole of nitrate in the precursor mixture of step (ii-a) or step (ii-c) is comprised between 0.9 and 1.1 times the value of ϕ¹, wherein ϕ¹ is as defined above; and
- the precursor mixture of steps (ii-a) or (ii-c) comprises metals in a concentration of between 0.05 M and 0.7 M; preferably of between 0.1 M and 0.2 M; more preferably of about 0.15 M.

In more preferred embodiments, the process of the first aspect of the invention is one wherein:
- the support of step (i) comprises nickel; preferably it is nickel foam;
- the oxidation agent of step (ii-b) or of the precursor mixture of step (ii-a) is selected from the group consisting of perrhenate salts, tetra- or hexachloroplatinate salts, hexachloroplatinic acid, tetra- or hexachlororuthenate salts, hexachlororuthenic acid, hexachlororhodate salts, tetra- or hexachloroiridate salts, and hexachloroiridic acid; preferably it is selected from the group consisting of hexachloroplatinic acid, potassium tetra- or hexachloroplatinate, and platinum(II) iodide;
- the source of nitrate salt of nickel(II), iron(III) and/or cobalt(ll) of the precursor mixture of step (ii-a) or of step (ii-c) is nickel(ll) nitrate or a hydrate thereof; and
- the precursor mixture of step (ii-a) of the first alternative is one wherein the concentration of the oxidation agent is comprised between 5 mM and 30 mM; preferably between 5 mM and 15 mM; preferably it is of about 7 mM; or, alternatively, step (ii-b) comprises contacting the support provided in step (i) with a solution of the oxidation agent wherein the concentration of the oxidation agent is comprised between 5 mM and 30 mM; preferably between 5 mM and 15 mM; preferably it is of about 7 mM.

In more preferred embodiments, the process of the first aspect of the invention is one wherein:
- the support of step (i) comprises nickel; preferably it is nickel foam;
- the oxidation agent of step (ii-b) or of the precursor mixture of step (ii-a) is selected from the group consisting of perrhenate salts, tetra- or hexachloroplatinate salts, hexachloroplatinic acid, tetra- or hexachlororuthenate salts, hexachlororuthenic acid, hexachlororhodate salts, tetra- or hexachloroiridate salts, and hexachloroiridic acid; preferably it is selected from the group consisting of hexachloroplatinic acid, potassium tetra- or hexachloroplatinate, and platinum(II) iodide;
- the source of nitrate salt of nickel(II), iron(III), and/or cobalt(II) of the precursor mixture of step (ii-a) or of step (ii-c) is nickel(ll) nitrate or a hydrate thereof;
- the fuel component of the precursor mixture of step (ii-a) or of step (ii-c) is selected from the group consisting of urea, citric acid, glycine, ethylene glycol, 1,2-dimethoxyethane, hexamethylenetetramine, acetylacetone, and mixtures thereof; preferably, the fuel component is selected from the group consisting of ethylene glycol, citric acid, and salts thereof;
- the number of moles of fuel component per each mole of nitrate in the precursor mixture of step (ii-a) or step (ii-c) is comprised between 0.9 and 1.1 times the value of ϕ¹, wherein ϕ¹ is as defined above;
- the precursor mixture of steps (ii-a) or (ii-c) comprises metals in a concentration of between 0.05 M and 0.7 M; preferably of between 0.1 M and 0.2 M; more preferably of about 0.15 M; and
- the precursor mixture of step (ii-a) of the first alternative is one wherein the concentration of the oxidation agent is comprised between 5 mM and 30 mM; preferably between 5 mM and 15 mM; preferably it is of about 7 mM; or, alternatively, step (ii-b) comprises contacting the support provided in step (i) with a solution of the oxidation agent wherein the concentration of the oxidation agent is comprised between 5 mM and 30 mM; preferably between 5 mM and 15 mM; preferably it is of about 7 mM.

As mentioned above, the second aspect of the invention relates to an electrode obtainable by the method of the first aspect of the invention.

As will become apparent to the skilled person, each particular and preferred embodiment described above for each of the technical features of steps (i), (ii-a), (ii-b), (iic), (iii-a), (iii-b), (iv) and, optionally, steps (v) and/or (vi) of the first aspect of the invention produces an electrode according to the second aspect of the invention. The present application thus covers an electrode obtained by the method of the first aspect of the invention comprising any combination of the particular and preferred embodiment described above for each of the technical features of steps (i), (ii-a), (ii-b), (iic), (iii-a), (iii-b), (iv) and, optionally, (v) and/or (vi).

In particular embodiments, the electrode of the second aspect of the invention does not comprise a nanowire or nanorod material.

In particular embodiments, the electrode of the second aspect of the invention comprises a phase of a metal oxide selected from nickel oxide, iron oxide, cobalt oxide and a mixture thereof that is at least partially crystalline ; preferably, said phase is essentially crystalline

In particular embodiments, the layer material of the electrode of the second aspect of the invention comprises from 1% to 20% in weight of the noble metal M, preferably from 5% to 15% in weight as measured by Energy-dispersive X-ray (EDX or EDS) microscopy.

In particular embodiments, the layer material of the electrode of the second aspect of the invention comprises from 40% to 80% in weight of nickel, iron and/or cobalt, preferably from 50% to 75% in weight of nickel, iron, and/or cobalt; more preferably from 55% to 70% in weight of nickel, iron, and/or cobalt, as measured by Energy-dispersive X-ray (EDX or EDS) microscopy.

In particular embodiments, the layer material of the electrode of the second aspect of the invention comprises from 10% to 20% in weight of oxygen, preferably from 15% to 20% in weight of oxygen, as measured by Energy-dispersive X-ray (EDX or EDS) microscopy.

In other particular embodiments, the layer material of the electrode of the second aspect of the invention is one wherein the noble metal atom M represents from 0.5% to 10% of the atoms comprised in said layer; preferably from 1% to 5% of the atoms comprised in said layer.

In other particular embodiments, the layer material of the electrode of the second aspect of the invention is one wherein nickel, iron and/or cobalt represent from 30% to 60% of the atoms comprised in said layer; preferably from 40% to 50% of the atoms comprised in said layer.

In other particular embodiments, the layer material of the electrode of the second aspect of the invention is one wherein oxygen represents from 30% to 60% of the atoms comprised in said layer; preferably from 40% to 50% of the atoms comprised in said layer.

In further preferred embodiments, the layer material of the electrode of the second aspect of the invention comprises a crystalline phase consisting essentially of a metal oxide selected from nickel oxide, iron oxide, cobalt oxide, and a mixture thereof.

As mentioned above, the third aspect of the invention relates to a device, such as an electrolyser, comprising at least one electrode according to the second aspect of the invention.

In particular embodiments, the device of the third aspect of the invention is a water electrolyser comprising a cathode consisting of an electrode according to the second aspect of the invention, an anode comprising an electrocatalytically active material suitable for the oxygen evolution reaction, and an alkaline electrolyte. Electrocatalytically active materials suitable for the oxygen evolution reaction are known in the art and will become apparent to the skilled person upon reduction to practice of the invention. Those materials include, for instance, those disclosed for this purpose in Chem. Soc. Rev., 2022,51, 4583-4762, the content of which is incorporated herein by reference. The alkaline medium is preferably an aqueous solution of a hydroxide salt of an alkaline cation such as lithium, sodium, or potassium. Preferably, the alkaline medium is an aqueous solution of potassium hydroxide, such that the pH of the solution is at least 12; preferably at least 13. The cathode and anode are preferably connected through a nickel or copper wire.

In further embodiments, the alkaline medium is an aqueous solution of potassium hydroxide comprising about 30% w/v of KOH.

Such water electrolyser may be an alkaline water electrolyser connecting the anode and the cathode via a saline bridge, a porous spacer such as a frit or an aqueous electrolytic solution or a diaphragm, or an anion exchange membrane electrolyser (AEM electrolyser) wherein the anode and the cathode are separated by a membrane suitable for exchanging hydroxide ions. Such membrane suitable for exchanging hydroxide ions are known in the art and may be selected from the group consisting of polysulfones, poly(2,6-dimethyl-p-phylene) oxide, polybenzimidazole, and inorganic composite materials.

As mentioned above, the fourth aspect of the invention relates to the use of an electrode according to the second aspect of the invention as a cathode in alkaline water electrolytic processes.

In preferred embodiments, the use of the fourth aspect of the invention is in a method for the production of hydrogen which comprises contacting water with an electrode according to the second aspect of the invention.

Said method is preferably carried out in an alkaline water solution. The alkaline medium is preferably an aqueous solution of a hydroxide salt of an alkaline cation such as lithium, sodium or potassium. Preferably, the alkaline medium is an aqueous solution of potassium hydroxide, such that the pH of the solution is at least 12; preferably at least 13.

The method of the preferred embodiments of the fourth aspect of the invention is preferably carried out in an alkaline water solution that comprises a hydroxide salt of potassium in an amount of between 20% w/v and 40% w/v; preferably of about 30% w/v.

The method of the preferred embodiments of the fourth aspect of the invention is preferably carried out at a temperature of between 50 °C and 90 °C; preferably of about 80 °C.

As known in the art, the current density measured at said electrode is directly proportional to the amount of hydrogen produced by reaction of water with the cathode. The efficiency of the electrode may be measured by the value of the potential at which a certain current density is obtained. The lower the value of said potential, the higher the efficiency of the electrode. This is in relation with the fact that the catalytically active layer of the electrode allows decreasing the energy requirements of the reactions.

In preferred embodiments, the use of the fourth aspect of the invention is in a method for the production of hydrogen which comprises contacting water with an electrode according to the second aspect of the invention wherein the value of the potential at which a current density of 1 A per cm² is observed when the electrode is contacted with an aqueous solution of potassium hydroxide of 30% w/v at a temperature of 80 °C is comprised between -0.3 V and 0 V vs (RHE); preferably between -0.2 V and 0 V vs (RHE).

In more preferred embodiments, the use of the fourth aspect of the invention is in a method for the production of hydrogen which comprises contacting water with an electrode according to the second aspect of the invention wherein the value of the potential at which a current density of 1 A per cm² is observed when the electrode is contacted with an aqueous solution of potassium hydroxide of 30% w/v at a temperature of 80 °C is comprised between -0.17 V and 0 V vs (RHE). This is particularly the case when the electrode is prepared according to a method of the first aspect of the invention wherein the oxidation agent comprising the metal M is a chlorometallate salt or a chlorometallic acid.

In even more preferred embodiments, in particular when the electrode of the second aspect of the invention is prepared according to the first alternative of the process of the first aspect of the invention, the use of the fourth aspect of the invention is in a method for the production of hydrogen which comprises contacting water with an electrode according to the second aspect of the invention wherein the value of the potential at which a current density of 1 A per cm² is observed when the electrode is contacted with an aqueous solution of potassium hydroxide of 30% w/v at a temperature of 80 °C is comprised between -0.15 V and 0 V vs (RHE). This is particularly the case when the electrode is prepared according to the first alternative of the first aspect of the invention.

Throughout the description and claims the word "comprises" and variations of the word, are not intended to exclude other technical features, additives, components or steps. Furthermore, the word "comprise" encompasses the cases of "consist of" and "consists essentially of". Additional objects, advantages and features of the invention will become apparent to those skilled in the art upon examination of the description or may be learned by practice of the invention. The following examples are provided by way of illustration, and they are not intended to be limiting of the present invention.

### EXAMPLES

### General procedures

Electrodes and powder thermal treatments were conducted in a Nabertherm oven NAT 30/65. The electrochemical measurements on the electrodes were registered using an Ivium Octostat 5000 Potentiostat. The powder X-ray diffraction (PXRD) patterns of (M)-NiO powder samples were recorded on a D8 Advance Series 2Theta/Theta powder diffraction system using CuKα1-radiation in transmission geometry. The data were collected with an angular step of 0.02 at 12 s per step and sample rotation. Scanning electron microscopy (SEM, FEI Quanta 600 FE) conditions are 20 kV accelerating voltage and a working distance close to 10 mm. Transmission electron microscopy (TEM) was operated at 80 kV. Samples were dispersed in ethanol and a drop of the resulting suspensions was poured on carbon coated-copper grids.

### Electrochemical characterization

The performance of each of the prepared electrodes below as cathode for alkaline HER was evaluated by measuring polarization curves with a potentiostat in a three electrode set-up, using the electrode of the Examples and Comparative Examples below as working electrode, platinum wire or platinum mesh as counter electrode, Hg/HgO 1 M NaOH as reference electrode, and an aqueous solution of 30% wt KOH in water placed at 80 °C as electrolyte. A three-electrode cell was assembled using the working electrode, reference electrode, counter electrode and electrolyte defined above. The electrolyte was then heated at 80 °C on a heating plate. In each procedure, the cell was pre-conditioned by applying a first series of current steps of one minute per step between 0 and -2 A/cm², decreasing the current density of 0.2 A/cm², followed by a second series of current steps of one minute per step between -2 and 0 A/cm², increasing the current density of 0.2 A/cm². Polarization curves were then acquired by increasing the current density from 0 to -2 A/cm² in steps of -0.1 A/cm² of 2 minutes per step, while electric potential is measured. For each point, the polarization resistance was measured by electrochemical impedance spectroscopy and adjust the potential. The resulting polarization curve was compensated for ohmic drop of voltage and polarization resistance was reported for each step. The overpotential value (using Hg/HgO as reference electrode) at -1 A/cm² was used as a parameter of choice to measure the performance of the working electrode as cathode in HER.

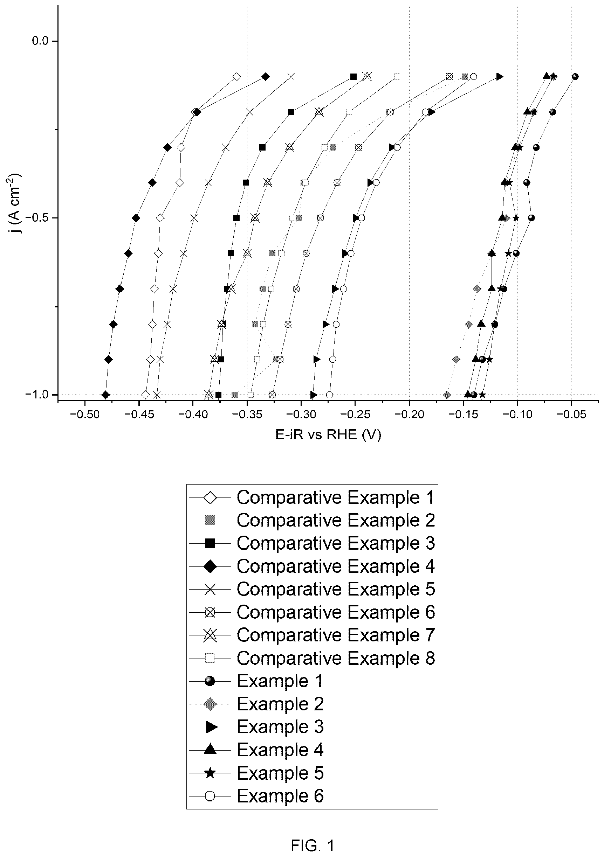

Figure 1 shows the polarization curves obtained according to the above procedure for the electrodes described below.

### Comparative example 1: Blank electrode

A Nickel Foam (NF) substrate (surface density: 1450 g/m², thickness: 1.6 mm) was subjected to cleaning and surface activation procedures, with acetone and 10% v/v HCl in water. The sample was thoroughly rinsed with water and dried at a temperature of 60 °C. The so-obtained electrode registered a hydrogen evolution reaction (HER) potential of -444 mV/RHE in 30% w/v aqueous KOH, at a temperature of 80 °C and at a current density of 1 A/cm².

### Comparative example 2: Pt@NF

A Nickel Foam (NF) substrate (surface density: 1450 g/m², thickness: 1.6 mm) was subjected to cleaning and surface activation procedures, with acetone and 10% v/v aqueous HCl. The sample was thoroughly rinsed with water and dried at a temperature of 60 °C. The as-prepared NF was then dip-coated for 1 minute in an aqueous solution containing hexachloroplatinic acid, concentrated nitric acid, and citric acid (nitric acid final concentration = 0.15 M, molar ratio citric acid/metal = 0.5, total metal concentration = 7 mM). The sample was finally cured at a temperature of 250 °C, for 5 minutes. The so-obtained electrode registered a hydrogen evolution reaction (HER) potential of -361 mV/RHE in 30% w/v aqueous KOH, at a temperature of 80 °C and at a current density of 1 A/cm².

### Comparative example 3: Pt(II)@NF

A Nickel Foam (NF) substrate (surface density: 1450 g/m², thickness: 1.6 mm) was subjected to cleaning and surface activation procedures, with acetone and 10% v/v HCl in water. The sample was thoroughly rinsed with water and dried at a temperature of 60 °C. The as-prepared NF substrate was then dip-coated for 1 minute in an aqueous solution containing potassium tetrachloroplatinate, concentrated nitric acid, and citric acid (nitric acid final concentration = 0.15 M, molar ratio citric acid/metal = 0.5, total metal concentration = 7 mM). The sample was finally cured at a temperature between 250 °C, for 5 minutes. The so-obtained electrode registered a hydrogen evolution reaction (HER) potential of -376 mV/RHE in 30% w/v aqueous KOH, at a temperature of 80 °C and at a current density of 1 A/cm².

### Comparative example 4: Pt@NiO@NF

A Nickel Foam (NF) substrate (surface density: 1450 g/m², thickness: 1.6 mm) was subjected to cleaning and surface activation procedures, with acetone and 10% v/v HCl in water. The sample was thoroughly rinsed with water and dried at a temperature of 60 °C. The as-prepared NF substrate was then dip-coated for 1 minute in an aqueous solution containing nickel nitrate and citric acid (molar ratio citric acid/ metal = 0.5, total metal concentration = 0.142 M). The sample was dried at a temperature of temperature of 60 °C. In the second stage, the resulting electrode was dip coated for 1 minute in an aqueous solution containing hexachloroplatinic acid (concentration = 7 mM). The sample was finally cured at a temperature between 250 °C, for 5 minutes. The so-obtained electrode registered a hydrogen evolution reaction (HER) potential of -481 mV/RHE in 30% w/v aqueous KOH, at a temperature of 80 °C and at a current density of 1 A/cm².

### Comparative Example 5: NiO@NF

A Nickel Foam (NF) substrate (surface density: 1450 g/m², thickness: 1.6 mm) was subjected to cleaning and surface activation procedures, with acetone and 10% v/v HCl. The as-prepared NF prepared substrate was then dip-coated for 1 minute in an aqueous solution containing only nickel nitrate and citric acid (molar ratio citric acid/metal = 0.5, total metal concentration = 0.15 M). The sample was finally cured at a temperature of 380 °C, for 20 minutes, The so-obtained electrode registered a hydrogen evolution reaction (HER) potential of -433 mV/RHE in 30% w/v aqueous KOH, at a temperature of 80 °C and at a current density of 1 A/cm².

### Comparative Example 6: Preparation of Pt·NiO@NF by thermal decomposition of nickel chloride in the presence of a fuel

This comparative example aims at reproducing a process as disclosed in the art, for instance in German patent application DE 3 612 790 A1.

A Nickel Foam (NF) substrate (surface density: 1450 g/m², thickness: 1.6 mm) was subjected to cleaning and surface activation procedures, with acetone and 10% v/v HCl. The sample was thoroughly rinsed with water and dried at a temperature of 60 °C. The as-prepared NF prepared substrate was then dip-coated for 1 minute in an acidic aqueous solution containing chloroplatinic acid, nickel chloride, and citric acid (molar ratio citric acid/ metals = 0.5, molar ratio Ni/Pt = 19, total metal concentration = 0.15 M). The sample was finally cured at a temperature of 375 °C, for 20 minutes. The so-obtained electrode registered a hydrogen evolution reaction (HER) potential of -327 mV/RHE in 30% w/v aqueous KOH, at a temperature of 80 °C and at a current density of 1 A/cm².

### Comparative Example 7: Preparation of Pt·NiO@NF by thermal decomposition of nickel nitrate in the absence of a fuel

This comparative example aims at reproducing a process as disclosed in the art, for instance in European patent application EP 0 129 734 A2.

A Nickel Foam (NF) substrate (surface density: 1450 g/m², thickness: 1.6 mm) was subjected to cleaning and surface activation procedures, with acetone and 10% v/v HCl. The sample was thoroughly rinsed with water and dried at a temperature of 60 °C. The as-prepared NF prepared substrate was then dip-coated for 1 minute in an acidic aqueous solution containing only chloroplatinic acid and nickel nitrate (molar ratio Ni/Pt = 19, total metal concentration = 0.15 M). The sample was finally cured at a temperature of 520 °C, for 15 minutes. The so-obtained electrode registered a hydrogen evolution reaction (HER) potential of -385 mV/RHE in 30% w/v aqueous KOH, at a temperature of 80 °C and at a current density of 1 A/cm².

SEM/EDX data were acquired for a powder resulting from the curing at 520 °C during 15 minutes of a dried acidic aqueous solution containing only chloroplatinic acid and nickel nitrate (molar ratio Ni/Pt = 19, total metal concentration = 0.15 M). Said EDX data relate to the following composition:

**Table 2**

| Element | Line Type | Apparent Concentration | k Ratio | Wt% | Wt% Sigma | Atomic % |
|---|---|---|---|---|---|---|
| O | K series | 4.24 | 0.01426 | 23.65 | 0.23 | 53.90 |
| Cl | K series | 2.08 | 0.01818 | 10.35 | 0.09 | 10.64 |
| Ni | K series | 9.74 | 0.09738 | 53.21 | 0.38 | 33.06 |
| Pt | M series | 1.92 | 0.01915 | 12.79 | 0.20 | 2.39 |
| Total: | | | | 100.00 | | 100.00 |

### Comparative Example 8: Preparation of Pt·NiO@NF by thermal decomposition of nickel chloride using spray coating to transfer the precursor mixture to the support

A Nickel Foam (NF), substrate (surface density: 1450 g/m², thickness: 1.6 mm) was subjected to cleaning and surface activation procedures, with acetone and 10% v/v HCl. The sample was thoroughly rinsed with water and dried at a temperature of 60 °C. The as-prepared substrate was then sprayed with an aqueous solution containing chloroplatinic acid, nickel chloride, and citric acid in different molar ratios (molar ratio citric acid/metals = 0.2, molar ratio Ni/Pt = 19, total metal concentration = 0.5 M). The as-obtained samples were then cured at a temperature of 380 °C for 20 minutes. The so-obtained electrode registered hydrogen evolution reaction a hydrogen evolution reaction (HER) potential of -348 mV/RHE in 30% KOH, at a temperature of 80 °C and at a current density of 1 A/cm².

### Example 1: Process of the first alternative of the invention NiO·Pt@NF

A Nickel Foam (NF) substrate (surface density: 1450 g/m², thickness: 1.6 mm) was subjected to cleaning and surface activation procedures, with acetone and 10% v/v HCl in water. The sample was thoroughly rinsed with water and dried at a temperature of 60 °C. The as-prepared NF substrate was then dip-coated for 1 minute in an aqueous solution containing hexachloroplatinic acid, nickel nitrate, and citric acid (molar ratio citric acid/metals = 0.5 (2:1), molar ratio Ni/Pt = 19, total metal concentration = 0.15 M). The sample was finally cured at a temperature of 250 °C, for 5 minutes. The so-obtained electrode registered a hydrogen evolution reaction (HER) potential of -140 mV/RHE in 30% w/v aqueous KOH, at a temperature of 80 °C and at a current density of 1 A/cm².

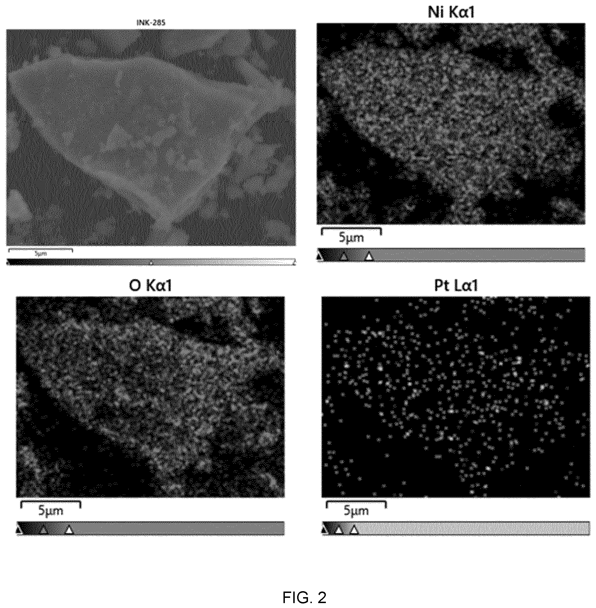

Figure 2 shows a SEM/EDX picture of the powder obtained by curing at 250 ° C for 5 minutes an aqueous solution containing hexachloroplatinic acid, nickel nitrate, and citric acid (molar ratio citric acid/metals = 0.5 (2:1), molar ratio Ni/Pt = 0.19, total metal concentration = 0.15 M). Said EDX data relate to the following composition:

**Table 3**

| Element | Line Type | Apparent Concentration | k Ratio | Wt% | Wt% Sigma | Atomic % |
|---|---|---|---|---|---|---|
| O | K series | 4.45 | 0.01498 | 18.13 | 0.30 | 46.47 |
| Cl | K series | 0.85 | 0.00739 | 5.15 | 0.14 | 5.96 |
| Ni | K series | 10.95 | 0.10950 | 64.38 | 0.46 | 44.98 |
| Pt | M series | 1.44 | 0.01443 | 12.34 | 0.40 | 2.59 |
| Total: | | | | 100.00 | | 100.00 |

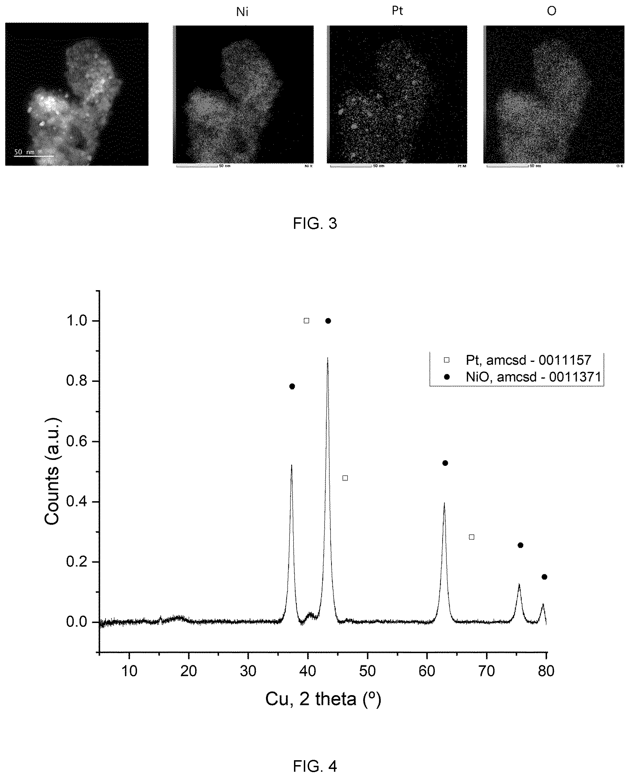

Figure 3 shows a PXRD pattern of the powder obtained by curing at 250 ° C for 5 minutes an aqueous solution containing hexachloroplatinic acid, nickel nitrate, and citric acid. The obtained solid comprises a crystalline phase comprising NiO and Pt.

### Example 2: Process of the second alternative of the invention NiO@Pt@NF

A Nickel Foam (NF) substrate (surface density: 1450 g/m², thickness: 1.6 mm) was subjected to cleaning and surface activation procedures, with acetone and 10% v/v HCl in water. The sample was thoroughly rinsed with water and dried at a temperature of 60 °C. The as-prepared NF substrate was then dip-coated for 1 minute in an aqueous solution an aqueous solution containing hexachloroplatinic acid (concentration = 7 mM). The sample was dried at a temperature of at a temperature of 60 °C. In the second stage, the resulting electrode was dip coated for 1 minute in an aqueous solution containing nickel nitrate and citric acid (molar ratio citric acid/metal = 0.5, total metal concentration = 0.142 M). The sample was finally cured at a temperature of 250 °C, for 5 minutes. The so-obtained electrode registered a hydrogen evolution reaction (HER) potential of -165 mV/RHE in 30% w/v aqueous KOH, at a temperature of 80 °C and at a current density of 1 A/cm².

### Example 3: Process of the first alternative of the invention using platinum(II) iodide as oxidation agent

A Nickel Foam (NF) substrate (surface density: 1450 g/m², thickness: 1.6 mm) was subjected to cleaning and surface activation procedures, with acetone and 10% v/v HCl in water. The sample was thoroughly rinsed with water and dried at a temperature of 60 °C. The as-prepared NF prepared substrate was then dip-coated for 1 minute in an acidic aqueous solution (HNO₃, final concentration = 0.15 M) containing platinum iodide, nickel nitrate, and citric acid (molar ratio citric acid/metals = 0.5 (2:1); molar ratio Ni/Pt = 19; total metal concentration = 0.15 M). The sample was finally cured at a temperature between 250 °C, for 5 minutes. The so-obtained electrode registered a hydrogen evolution reaction (HER) potential of -289 mV/RHE in 30% w/v aqueous KOH, at a temperature of 80 °C and at a current density of 1 A/cm².

### Example 4: Process of the first alternative of the invention using potassium tetrachloroplatinate as oxidation agent

A Nickel Foam (NF) substrate (surface density: 1450 g/m², thickness: 1.6 mm) was subjected to cleaning and surface activation procedures, with acetone and 10% v/v HCl in water. The sample was thoroughly rinsed with water and dried at a temperature of 60 °C. The as-prepared NF prepared substrate was then dip-coated for 1 minute in an aqueous solution containing potassium tetrachloroplatinate, nickel nitrate, and citric acid (molar ratio citric acid/metals = 0.5, molar ratio Ni/Pt = 19, total metal concentration = 0.15 M). The sample was finally cured at a temperature of 250 °C, for 5 minutes. The so-obtained electrode registered a hydrogen evolution reaction (HER) potential of -146 mV/RHE in 30% w/v aqueous KOH, at a temperature of 80 °C and at a current density of 1 A/cm².

### Example 5: Process of the first alternative of the invention using ethylene glycol as fuel

A Nickel Foam (NF) substrate (surface density: 1450 g/m², thickness: 1.6 mm) was subjected to cleaning and surface activation procedures, with acetone and 10% v/v HCl in water. The sample was thoroughly rinsed with water and dried at a temperature of 60°C. The as-prepared NF prepared substrate was then dip-coated for 1 minute in an acidic aqueous solution containing hexachloroplatinic acid, nickel nitrate, and ethylene glycol (molar ratio ethylene glycol : metals = 0.9, molar ratio Ni/Pt = 19, total metal concentration = 0.15 M). The sample was finally cured at a temperature of 250 °C, for 5 minutes. The so-obtained electrode registered a hydrogen evolution reaction (HER) potential of -132 mV/RHE in 30% w/v aqueous KOH, at a temperature of 80 °C and at a current density of 1 A/cm².

### Example 6: Process of the first alternative of the invention using spray coating to transfer the precursor mixture to the support

A Nickel Foam (NF), substrate (surface density: 1450 g/m², thickness: 1.6 mm) was subjected to cleaning and surface activation procedures, with acetone and 10% v/v HCl. The sample was thoroughly rinsed with water and dried at a temperature of 60 °C. The as-prepared substrate was then sprayed with an aqueous solution containing chloroplatinic acid, nickel nitrate, and citric acid (molar ratio citric acid/metals = 0.5, molar ratio Ni/Pt = 19, total metal concentration = 0.5 M). The as-obtained samples were then cured at a temperature of 380 °C for 20 minutes. The so-obtained electrode registered hydrogen evolution reaction a hydrogen evolution reaction (HER) potential of -274 mV/RHE in 30% w/v KOH, at a temperature of 80 °C and at a current density of 1 A/cm².

### Discussion of results

The results of Figure 1 show that the cathode materials prepared according to the process of the invention allow preparing hydrogen in an efficient manner, in particular with a reduced energy consumption, as the potential required to reach a certain current density is particularly low when the electrodes according to any of Examples 1 to 6 are used as cathodes for the preparation of hydrogen.

In particular, the obtained results suggest that there is a synergistic effect in reducing the potential for alkaline HER when the layer material is prepared by solution combustion synthesis. As mentioned above, and without being bound to theory, it is believed that the solution-combustion synthesis of the oxide of nickel(II), iron(II/III), and/or cobalt(II) is concurrent with a substantially homogeneous distribution or redistribution of the atoms of the noble metal M bound to or interacting with the surface of the electrode support (e.g. as a result of galvanic replacement). Said homogeneous distribution of M atoms contributes to increasing the effective area of noble metal M by preventing the aggregation of particles and/or clusters of M and translates in an improved catalytic activity for the HER reaction. As shown in Examples 1-2, for which the nickel oxide is prepared by solution-combustion synthesis, Comparative Examples 6-7, wherein nickel oxide is obtained by thermal decomposition of nickel precursors in the presence of an oxidation agent comprising a metal M, and Comparative Examples 5 and 2 which respectively disclose the preparation of an electrode comprising NiO (Comparative Example 5) and Pt (Comparative Example 2) by solution-combustion synthesis, the combination of the treatment of the support with an oxidation agent comprising a metal M as defined herein with the preparation of nickel, iron and/or cobalt oxide by solution combustion synthesis unexpectedly provides for an improved catalytic activity towards the HER reaction in a manner that a synergy exists between these two methods.

The results of Table 2 and Table 3 also suggest that performing the combustion synthesis for the preparation of a metal oxide selected from nickel oxide, iron oxide, cobalt oxide and a mixture thereof allows increasing the amount of metal M in the layer material; which provides a further rationale to the improved activity of the electrodes of the invention.

The substantially homogeneous distribution of the atoms of M is shown in Figure 2.
The invention thus provides a method for the preparation of electrodes that are particularly active as cathodes for water electrolysis and in particular any electrochemical process involving the hydrogen evolution reaction carried out in alkaline medium. The process of the invention is advantageous in that the formation of the active catalytic phase is energetically self-sufficient provided that step (iv) is carried out at a temperature sufficiently high to trigger the combustion reaction between the source of nitrate salt of nickel(II), iron(III) and/or cobalt(II) and the fuel component comprised in the precursor mixture. Such combustion reaction is highly exothermal and proceeds to completion of the reaction and formation of the active phase with no need for external supply of energy and in a reduced amount of time. Consequently, the process of the invention is not only sustainable in terms of energy consumption but also produces particularly active electrodes in a reduced amount of time. In addition, and as mentioned above, the process of the invention does not require the use of binders or complex organometallic precursors for the preparation of electrodes coated with a catalytically active material. Therefore, the process allows for a fast, robust, scalable, and reproducible production of electrodes catalytically active in electrolytic cell applications. The process of the invention further advantageously uses shelf-stable precursor solutions and supports. In addition, the electrodes of the invention possess very good stability against *reverse current* damage. Indeed, the performance variations after 200 cyclic voltammetry experiments (-1.500 V ↔ 0.500 V) fall in the range of experimental error (~10-20 mV), showing that the performance of said electrode does not vary substantially upon cycling.

## Claims

1. Process for the preparation of an electrode comprising a support coated with a layer comprising a metal oxide selected from nickel oxide, iron oxide, cobalt oxide and a mixture thereof and a noble metal M selected from platinum, ruthenium, rhodium, rhenium and iridium, said process comprising the steps of:
(i) providing a support for electrode comprising a metal susceptible of being oxidized by the oxidation agent of the precursor mixture provided in step (ii-a) or the solution of step (ii-b);
in a first alternative,
(ii-a) providing a precursor mixture for solution combustion synthesis comprising (A) an oxidation agent comprising a noble metal M in its molecular formula selected from platinum, ruthenium, rhodium, rhenium and iridium and suitable for oxidizing the metal comprised in the support for electrode provided in step (i), (B) a fuel component, and (C) a source of a nitrate salt of one or more of nickel(II), cobalt(II) and iron(lll) or a solvate thereof;
(iii-a) transferring the precursor mixture of step (ii-a) to the support of step (i) to produce an electrode precursor;
or, in a second alternative,
(ii-b) contacting the support for electrode provided in step (i) with (A) an oxidation agent comprising a noble metal M selected from platinum, ruthenium, rhodium, rhenium and iridium in its molecular formula and suitable for oxidizing the metal comprised in the support for electrode provided in step (i);
(ii-c) providing a precursor mixture for solution combustion synthesis comprising (B) a fuel component, and (C) a source of a nitrate salt of one or more of nickel(II), cobalt(II) and iron(lll) or a solvate thereof; and
(iii-b) transferring to the support of step (ii-b) the precursor mixture of step (ii-c) to produce an electrode precursor;
(iv) heating the electrode precursor obtained in step (iii-a) of the first alternative or in step (iii-b) of the second alternative at a temperature sufficiently high to cause the transferred precursor mixture to self-ignite and initiate a combustion reaction; said combustion reaction producing said layer;
wherein the molar ratio of fuel component to nitrate anion in the precursor mixture of step (ii) is such that it allows essentially for the formation of a metal oxide selected from nickel oxide, iron oxide, cobalt oxide and a mixture thereof from nickel(II) nitrate, iron(III) nitrate and/or cobalt(II) nitrate during the combustion step of step (iv).

2. Process according to claim 1 wherein the support of step (i) is selected from the group consisting of metal mesh, metal foam, metal foil and metal felt, wherein the metal is preferably nickel or stainless steel.

3. Process according to any one of claims 1 to 2 wherein the precursor mixture of step (ii-a) of the first alternative or of step (ii-c) of the second alternative is an aqueous solution.

4. Process according to any one of claims 1 to 3 wherein the fuel component of the precursor mixture of step (ii-a) of the first alternative or of step (ii-c) of the second alternative is a compound of formula CₗHₘOₙNₖ and wherein the number of moles of fuel component per each mole of nitrate in the precursor mixture of step (ii-a) or step (ii-c) is comprised between 0.8 and 1.2 times the value of ϕ¹, wherein ϕ¹ as defined in Equation (1) ${ϕ}^{1} = \frac{5}{4 l + m - 2 n}$ and wherein, preferably, k is an integer comprised between 0 and 5, l is an integer comprised between 1 and 10, m is an integer comprised between 4 and 50, and n is an integer comprised between 0 and 5.

5. Process according to any one of claims 1 to 4 wherein the fuel component is selected from the group consisting of ethylene glycol, citric acid and salts thereof; preferably, the fuel component is citric acid or a salt thereof, such as ammonium citrate.

6. Process according to any one of claims 1 to 5 wherein M is selected from the group consisting of rhenium(VII), rhodium(III), platinum(IV), iridium(IV), ruthenium(IV), platinum(II), iridium(III), and ruthenium(II).

7. Process according to any one of claims 1 to 6 wherein the oxidation agent is selected from the group consisting of platinum(II) iodide, a salt of tetra- or hexachloroplatinate and hexachloroplatinic acid.

8. Process according to any one of claims 1 to 7 wherein the molar ratio of the nickel(ll) nitrate salt, iron(III) nitrate salt and/or cobalt(II) nitrate salt to the molar amount of M in said oxidation agent in the precursor mixture of step (ii-a) of the first alternative is comprised of from 100:1 to 10:1; preferably from 30:1 to 10:1.

9. Process according to any one of claims 1 to 8 wherein the concentration of metals in the precursor mixture of step (ii-a) of the first alternative or step (ii-c) of the second alternative is comprised between 50 mM and 700 mM.

10. Process according to any one of claims 1 to 9 wherein the concentration of metals in the precursor mixture of step (ii-a) of the first alternative or step (ii-c) of the second alternative is comprised between 100 mM and 200 mM and wherein step (ii-b) comprises contacting the support with a solution of the oxidation agent wherein the concentration of the oxidation agent in said solution is comprised between 5 and 30 mM.

11. Process according to any one of claims 1 to 10 wherein steps (iii-a) and (ii-b) of the first and second alternatives comprise contacting the support for electrode provided in step (i) with the solution comprising the oxidation agent for a duration of between 0.5 and 1.5 minutes.

12. Process according to any one of claims 1 to 11 wherein step (iv) comprises heating the electrode precursor at a temperature comprised between 200 °C and 520 °C; more preferably at a temperature comprised between 200 °C and 400 °C; and even more preferably at a temperature of about 250 °C; even more preferably, the electrode precursor is heated at said temperature for a period of time from 5 to 20 minutes; preferably of about 5 minutes.

13. An electrode obtainable by the process according to any one of claims 1 to 12.

14. A device, such as an electrolyzer, comprising at least one electrode according to claim 13.

15. Use of an electrode according to claim 13 as a cathode in alkaline water electrolytic processes.
